# EUROPÄISCHE PATENTSCHRIFT

(11) **EP 1 351 837 B1**
(45) Veröffentlichungstag und Bekanntmachung des Hinweises auf die Patenterteilung: **22.04.2009**
(21) Anmeldenummer: 02716658.6
(22) Anmeldetag: 14.01.2002
(51) Int. Cl.: B60W 30/20, F16H 3/10, F16H 61/04, F16H 63/50, B60W 10/02, B60W 10/06

(54) **VERFAHREN ZUR STEUERUNG UND REGELUNG EINES ANTRIEBSSTRANGES**
METHOD FOR CONTROLLING AND REGULATING A DRIVE TRAIN
PROCEDE DE COMMANDE ET DE REGULATION D'UNE CHAINE CINEMATIQUE

(30) Priorität: 17.01.2001 DE 10101863
(43) Veröffentlichungstag der Anmeldung: 15.10.2003
(73) Patentinhaber: ZF FRIEDRICHSHAFEN Aktiengesellschaft, 88038 Friedrichshafen (DE)
(72) Erfinder: DREIBHOLZ, Ralf, 88074 Meckenbeuren (DE); BAASCH, Detlef, 88048 Friedrichshafen (DE); GUMPOLTSBERGER, Gerhard, 88045 Friedrichshafen (DE)
(86) Internationale Anmeldenummer: PCT/EP2002/000254
(87) Internationale Veröffentlichungsnummer: WO 2002/057108

(56) Entgegenhaltungen:
- DE-A- 19 735 759
- GB-A- 2 117 068
- US-A- 3 412 625
- PATENT ABSTRACTS OF JAPAN vol. 1996, no. 08, 30. August 1996 (1996-08-30) -& JP 08 109950 A (TOYOTA MOTOR CORP), 30. April 1996 (1996-04-30)
- PATENT ABSTRACTS OF JAPAN vol. 007, no. 157 (M-227), 9. Juli 1983 (1983-07-09) -& JP 58 065327 A (YOSHIO MIYAGI), 19. April 1983 (1983-04-19)

## Beschreibung

Die Erfindung betrifft ein Verfahren zur Steuerung und Regelung eines Antriebsstranges eines Fahrzeugs mit einem Antriebsaggregat, mit einem Getriebe und mit einem Abtrieb.

Aus der DE 197 35 759 A1 ist ein Verfahren zum Steuern einer automatischen Antriebsvorrichtung bekannt, welche eine Antriebsquelle, ein Geschwindigkeitswechselgetriebe mit mehreren kuppelbaren Zahnradsätzen, eine fluidbetätigbare Hauptkupplung und fluidbetätigbare Schaltmittel zum Aktivieren der einzelnen Zahnradsätze aufweist. Darüber hinaus ist für die Ansteuerung der Hauptkupplung und der Schaltmittel eine elektronische Steuerung vorgesehen, wobei zur Erzielung einer zugkraftunterbrechungsfreien Umschaltung der Schaltmittel die Hauptkupplung im Rutschzustand gehalten wird.

Zum Schalten der Vorwärtsgänge sind an einer Getriebeeingangswelle und an einer Getriebeausgangswelle jeweils eine Ziehkeileinrichtung als Kupplungselement bzw. Schaltmittel vorgesehen, die über je ein hydraulisches Stellelement zum Umschalten der Übersetzungsstufen bzw. Vorwärtsgänge betätigt werden. Dabei können jeweils zwei lose Zahnräder auf der Getriebeeingangswelle bzw. Getriebeabtriebswelle mit jeweils zwei Festzahnrädern auf der Getriebeeingangswelle bzw. der Getriebeabtriebswelle gekuppelt werden.

Innerhalb einer Zentralbohrung in der Getriebeeingangswelle ist ein Stößel verschiebbar geführt, der einen Ziehkeil als formschlüssiges Kupplungselement trägt. Der Ziehkeil durchragt dabei einen Radialschlitz in der Eingangswelle und wirkt mit Längsnuten in den Zahnrädern zusammen. Die Länge des Radialschlitzes erlaubt ein axiales Verschrieben des Ziehkeiles über den Stößel von einer ersten Position, in welcher der Ziehkeil ein erstes Zahnrad formschlüssig mit der Getriebeeingangswelle kuppelt, in eine mittlere Leerlaufposition, in der der Ziehkeil keine formschlüssige Verbindung zwischen der Getriebeeingangswelle und einem Zahnrad herstellt, und in eine dritte Position, in der ein weiteres Zahnrad einer neuen Übersetzungsstufe formschlüssig mit der Getriebeeingangswelle gekuppelt ist.

Um ein verschleißarmes Durchschalten des Ziehkeiles von dem einen Zahnrad zu dem anderen Zahnrad zu ermöglichen, wird im Umschaltmoment für ein kurzes Zeitintervall unabhängig von einer Gaspedalvorgabe eine Drosselklappe der Brennkraftmaschine im Öffnungsquerschnitt vermindert, um im Millisekunden- bis Zehntelsekundenbereich das Antriebsmoment der Brennkraftmaschine zu verringern.

Das vorbeschriebene Verfahren zum Steuern einer automatischen Antriebsvorrichtung weist jedoch den Nachteil auf, daß der Ziehkeil bzw. das Schaltelement bei einer Zughochschaltung unter Last aus dem Eingriff mit dem Zahnrad gezogen werden muß, wodurch hohe Schaltkräfte erforderlich sind. Zur Reduzierung dieser Schaltkräfte wird vorgeschlagen, das Antriebsmoment der Brennkraftmaschine im Umschaltmoment zu reduzieren, wobei durch diese Vorgehensweise der Antriebsstrang eines Kraftfahrzeuges über einen langen Zeitraum komplett entlastet wird, was zu einem Zugkrafteinbruch führt.

Aufgabe der vorliegenden Erfindung ist es daher, ein Verfahren zur Steuerung und Regelung eines Antriebsstranges zur Verfügung zu stellen, mittels welchem eine Zughochschaltung schnell und ohne Zugkraftunterbrechung bei hohem Schaltkomfort durchführbar ist.

Erfindungsgemäß wird diese Aufgabe mit einem Verfahren zur Steuerung und Regelung eines Antriebsstranges eines Fahrzeugs gemäß den Merkmalen des Patentanspruches 1 gelöst.

Mit dem erfindungsgemäßen Verfahren zur Steuerung und Regelung eines Antriebsstranges eines Fahrzeuges, bei welchem ein alter Gang oder ein neuer Gang über mit Zahnradpaarungen des Getriebes korrespondierende steuerbare Freilaufeinrichtungen ab- oder zugeschaltet wird, kann in vorteilhafter Weise auf eine Entlastung des Antriebsstranges verzichtet werden, womit eine Zugkraftunterbrechung während einer Zughochschaltung vermieden wird.

Dieser wesentliche Vorteil ergibt sich aus der Tatsache, daß der neue Gang bzw. die Wirkverbindung zwischen einer steuerbaren Freilaufeinrichtung und einer Zahnradpaarung des neuen Ganges schlagartig zugeschaltet wird, wobei ein alter aktuell eingelegter Gang bzw. die Wirkverbindung zwischen einer dem alten Gang zugeordneten steuerbaren Freilaufeinrichtung und einer die Übersetzungsstufe des alten Ganges ausbildenden Zahnradpaarung wenigstens annähernd gleichzeitig gelöst wird. Aufgrund dieser Vorgehensweise wird ein Kraftfluß in dem Antriebsstrang in vorteilhafterweise während der eigentlichen Schaltung nicht unterbrochen, und eine Zugkraftunterbrechung wird auf einfache Art und Weise vermieden.

Ein weiterer Vorteil des erfindungsgemäßen Verfahrens ist, daß während des Schaltvorgangs auftretende unerwünschte Schwingungen im Abtriebsstrang vermieden werden. Eine derartige zweite Schwingung tritt beispielsweise durch die schlagartige bzw. spontane Zuschaltung des neuen Ganges auf, da die getriebeeingangsseitigen Drehmassen über die Freilaufeinrichtung des neuen Ganges nahezu schlagartig mit der entsprechenden Differenzdrehzahl ankoppelt werden, was zu einem deutlichen Stoß und zu einer hohen Belastung der getriebeeingangsseitigen und getriebeausgangsseitigen Bauteile führt.

Zur Reduzierung dieser Schwingung ist es während des Ablaufs des Verfahrens,vorgesehen, daß ein Antriebsmoment des Antriebsaggregates vor der Zuschaltung des neuen Ganges schnell verringert wird, wodurch in vorteilhafter Weise eine erste Schwingung in dem Antriebsstrang generiert wird, die der zweiten Schwingung, die erst nach der ersten Schwingung auftritt, entgegenwirkt. Die Reduzierung des Antriebsmomentes führt aufgrund der im Abtrieb enthaltenen Federn und Drehmassen zunächst nur zu einer geringfügigen Entlastung des Abtriebs und nach einiger Zeit zu einer gedämpften Schwingungsanregung des Abtriebs. Durch das Zuschalten des neuen Ganges und die dadurch erzeugte zweite Schwingung verkleinern sich die beiden gegenwirkenden Schwingungen, womit ein hoher Schaltkomfort erreicht wird und die Bauteilbelastung des Antriebsstranges reduziert wird.

Damit wird in vorteilhafter Weise eine durch die Zuschaltung des neuen Ganges auftretende Momentüberhöhung in dem Antriebsstrang durch eine vorherige Reduzierung des Antriebsmomentes des Antriebsaggregates vermieden, und der durch die Schaltung angeregte Antriebsstrang bzw. ein pendelndes Abtriebsmoment wird innerhalb kürzester Zeit auf einen konstanten Wert des neuen Ganges eingestellt.

Weitere Vorteile und Weiterbildungen der Erfindung ergeben sich aus den Patentansprüchen und aus dem nachfolgend anhand der Zeichnung prinzipmäßig beschriebenen Ausführungsbeispiel.
Es zeigt:
- Fig. 1: einen schematisierten Verlauf eines Abtriebsmomentes während eines Schaltablaufes ohne Motoreingriff;
- Fig. 2: einen schematisierten Verlauf eines Abtriebsmomentes während eines Schaltvorganges mit gegenphasigem Motoreingriff und
- Fig. 3: eine schematisierte Darstellung eines Antriebsstranges mit einem Räderschema eines in dem Antriebsstrang angeordneten Getriebes, wobei ein leistungstrennendes Schaltelement auf einer Antriebsseite eines Getriebes angeordnet ist.

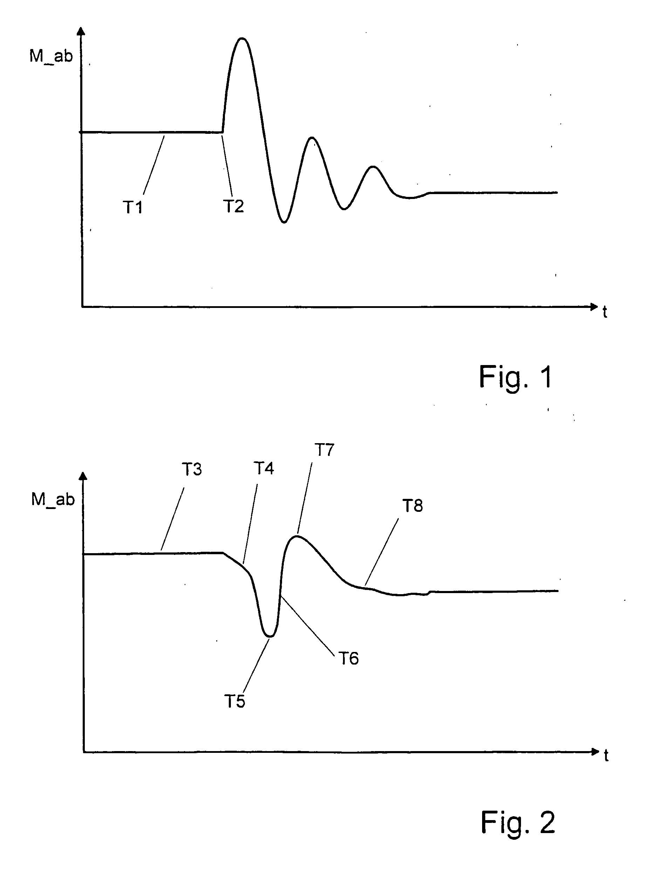

Anhand der in den Fig. 1 und Fig. 2 dargestellten Verläufe eines Abtriebsmomentes M_ab während eines Schaltablaufes einer Zughochschaltung soll die Wirkungsweise des erfindungsgemäßen Verfahrens zur Steuerung und Regelung eines Antriebsstranges eines Fahrzeuges aufgezeigt werden, wobei Fig. 2 im Unterschied zu Fig. 1 den Verlauf bei Anwendung des erfindungsgemäßen Verfahrens wiedergibt.

In Fig. 1 ist der Verlauf eines Momentes M_ab an einem Abtrieb eines Antriebsstranges eines Fahrzeugs bzw. eines Kraftfahrzeuges während eines Schaltvorganges von einem alten Gang zu einem neuen Gang während einer Zughochschaltung dargestellt, wie er sich ohne Anwendung des erfindungsgemäßen Verfahrens gestalten würde. Der gezeigte Verlauf des Abtriebsmomentes M_ab wird dabei ohne eine Reduktion eines Antriebsmomentes eines Antriebsaggregates des Antriebsstranges durchgeführt. Das Abtriebsmoment M_ab bzw. dessen Verlauf ist in Fig. 1 über der Zeit t aufgetragen und weist in einem ersten Bereich T1, in welchem in einem Getriebe des Antriebsstranges eine aktuelle Übersetzung eines alten Ganges eingestellt ist, einen wenigstens annähernd konstanten Wert auf. An einem Punkt T2, an welchem das Abtriebsmoment M_ab steil ansteigt, wird eine Übersetzung eines neuen Ganges schlagartig eingestellt, was zu einer Beschleunigung des Abtriebs und zu einem Anstieg des Abtriebsmomentes M_ab führt. Mit zunehmender Zeit wird die durch die Zuschaltung des neuen Ganges generierte Schwingung in dem Antriebsstrang gedämpft, bis sich ein der Übersetzung des neuen Ganges äquivalenter Wert des Abtriebsmomentes M_ab des neuen Ganges einstellt.

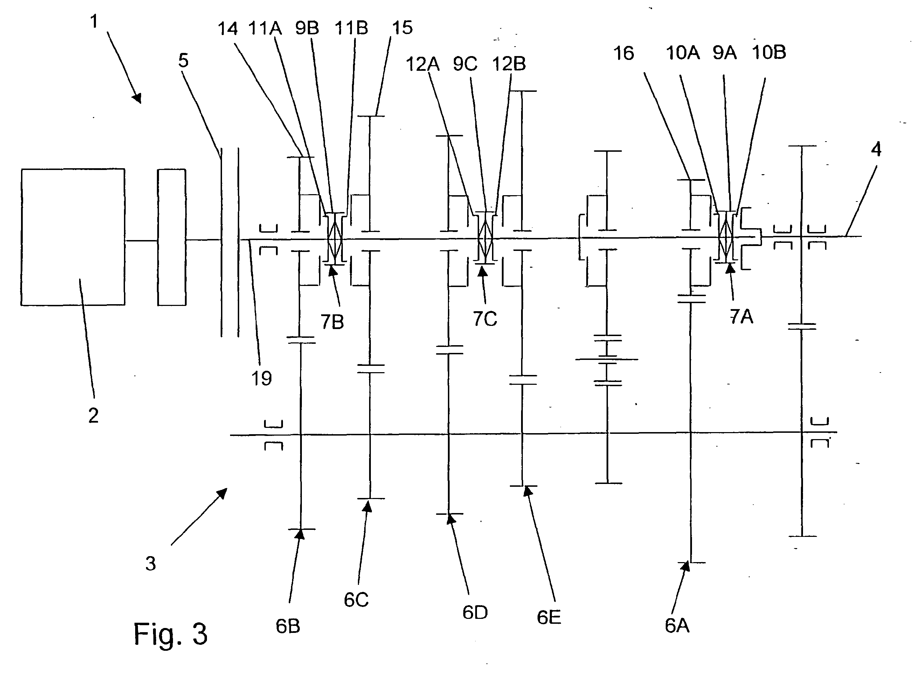

Dem in Fig. 2 gezeigten Verlauf des Abtriebsmomentes M_ab während eines Schaltvorganges liegt ein in Fig. 3 schematisch dargestellter Antriebsstrang 1 zugrunde, dessen Getriebe 3 mit Zahnradpaarungen 6A bis 6E korrespondierende steuerbare Freilaufeinrichtungen 7A bis 7C zum Ab- oder Zuschalten eines alten oder eines neuen Ganges und eine antriebsseitig angeordnete Kupplung 5 aufweist. Die Freilaufeinrichtungen 7A bis 7C sind jeweils mit einer Schaltmuffe 9A, 9B, 9C und jeweils zwischen zwei Losrädern 14, 15, 16 der Zahnradpaarungen 6A bis 6E und den Schaltmuffen 9A, 9B, 9C angeordneten Kupplungsscheiben 10A, 10B, 11A, 11B, 12A, 12B ausgebildet. In Abhängigkeit einer axialen Position der in axialer Richtung des Getriebes 3 verschieblich geführten Schaltmuffen 9A, 9B, 9C besteht die Möglichkeit, über die Freilaufeinrichtungen 7A bis 7C im Antriebsstrang 1 Zugmomente und/oder Zug- und Schubmomente von dem Antriebsaggregat 2 über das Getriebe 3 und eine Getriebeausgangswelle 17 zu dem Abtrieb 4 zu führen.

Bei Vorliegen eines Schaltsignals zur Durchführung einer Zughochschaltung wird zunächst ein Antriebsmoment des Antriebsaggregates 2 derart schnell reduziert, daß eine erste Schwingung in dem Antriebsstrang 1 angeregt wird.

Bei einem anschließenden Schaltvorgang wird eine Wirkverbindung zwischen einer betreffenden Freilaufeinrichtung der Freilaufeinrichtungen 7A bis 7C und einer damit korrespondierenden Zahnradpaarung des neuen Ganges derart abrupt bzw. schlagartig hergestellt, daß in dem Antriebsstrang 1 eine zweite, der ersten Schwingung entgegenwirkende Schwingung erzeugt wird und die Wirkverbindung des alten Ganges aufgrund einer Momentumkehr von einem Zugmoment zu einem Schubmoment mit der Zuschaltung des neuen Ganges gelöst wird. Bei dieser Vorgehensweise stellt sich am Abtrieb 4 ein Abtriebsmoment M_ab bzw. ein Verlauf eines Abtriebsmomentes M_ab gemäß der Darstellung in Fig. 2 ein.

Ein Zuschaltzeitpunkt des neuen Ganges ist dabei derart vorgesehen, daß die angeregte erste Schwingung und die erzeugte zweite Schwingung sich nahezu kompensieren bzw. gegenseitig auslöschen. Dabei ist der Zuschaltzeitpunkt des neuen Ganges vorzugsweise nach der Reduktion des Antriebsmomentes und vor dem ersten Lastwechsel vorgesehen.

Gemäß dem Verlauf des Abtriebsmomentes in Fig. 2 ist zunächst ein unter T3 näher bezeichneter erster Abschnitt mit einem konstanten Wert des Abtriebsmomentes M_ab dargestellt, der einen normalen Fahrbetriebsbereich des Antriebsstranges 1 wiedergibt. Daran anschließend nimmt das Abtriebsmoment' M_ab in einem weiteren Bereich T4 des Verlaufs des Abtriebsmomentes M_ab ab, wobei dieses Absinken des Abtriebsmomentes M_ab durch die Reduktion des Antriebsmomentes des Antriebsaggregates 2 bewirkt wird.

Vor Erreichen eines Minimums T5 des Verlaufs des Abtriebsmomentes erfolgt die schlagartige Zuschaltung des neuen Ganges. Dabei wird die Wirkverbindung zwischen der betreffenden Freilaufeinrichtung und der damit korrespondierenden Zahnradpaarung des neuen Ganges formschlüssig hergestellt. Durch die Zuschaltung des neuen Ganges wird der Abtrieb 4 des Antriebsstranges 1 beschleunigt, wodurch in einem zweiten Abschnitt T6 des Verlaufes des Abtriebsmomentes M_ab gemäß Fig. 2 der Wert des Abtriebsmomentes M_ab bis zu einem Punkt T7 ansteigt und dann entsprechend einem dritten Abschnitt T8 einen der Übersetzung des neuen Ganges äquivalenten Wert des Abtriebsmomentes M_ab entgegenläuft. Eine Getriebeeingangswelle 19 wird dabei abgebremst.

Bei Vorliegen eines Schaltsignals und vor der Zuschaltung des neuen Ganges wird eine Übertragungsfähigkeit der antriebsseitig angeordneten Kupplung 5 derart eingestellt, daß ein an der Kupplung anliegendes aktuelles Antriebsmoment des Antriebsaggregates 2 auf den Abtrieb 4 übertragen wird und die Kupplung 5 dabei keinen bzw. nur einen geringen Schlupf aufweist.

Weiter wird bei vorliegendem Schaltbefehl zur Durchführung einer Zughochschaltung eine Wirkverbindung zwischen einer der Freilaufeinrichtungen 7A bis 7C und einer damit korrespondierenden Zahnradpaarung 6A bis 6E des alten Ganges derart angesteuert, daß über diese Wirkverbindung anliegende Zugmomente von dem Antriebsaggregat 2 auf den Abtrieb 4 des Antriebsstranges 1 übertragen werden, und daß diese Wirkverbindung des alten Ganges gelöst wird, sobald an der Wirkverbindung ein Schubmoment anliegt.

Die Freilaufeinrichtungen 7A bis 7C des Getriebes 3 weisen hierzu eine derartige konstruktive Ausgestaltung auf, daß sie anliegende Zug- und Schubmomente übertragen können, wobei die einem alten Gang zugeordneten Freilaufeinrichtungen bzw. bei einer Schaltung, insbesondere einer Zughochschaltung, derart angesteuert werden, daß sie lediglich anliegende Zugmomente übertragen und bei einer Momentumkehr zu einem Schubmoment aus einer formschlüssigen Wirkverbindung mit einer korrespondierenden Zahnradpaarung schnell und spontan ausgerückt werden. Eine derartige Momentumkehr erfolgt durch die Zuschaltung des neuen Ganges, wobei mit einer schlagartigen Zuschaltung des neuen Ganges die Wirkverbindung gleichzeitig bzw. sofort nach der Zuschaltung des neuen Ganges gelöst wird.

Dazu kann es vorgesehen sein, daß eine mit der Freilaufeinrichtung korrespondierende Zahnradpaarung bzw. ein an der Zahnradpaarung angeordnetes Bauteil, über welche die formschlüssige Wirkverbindung eines Ganges hergestellt wird, eine Abweisflanke aufweist, welche bei einem anliegenden Schubmoment die Freilaufeinrichtung schlagartig aus dem Eingriff mit der Zahnradpaarung führt.

Mit dieser Ausgestaltung der Freilaufeinrichtungen 7A bis 7C und der damit korrespondierenden Zahnradpaarungen 6A bis 6E bzw. der zwischen diesen Bauteilen herstellbaren Wirkverbindungen, ist ein spontaner bzw. schlagartiger Wechsel von einer Übersetzung eines alten Ganges zu einer Übersetzung eines neuen Ganges äußerst schnell bei voller Last im Antriebsstrang 1 durchführbar.

Die Reduktion des Antriebsmomentes des Antriebsaggregates 2 wird im Fall, daß das Antriebsaggregat 2 als ein Ottomotor ausgebildet ist, über einen Zündeingriff realisiert, womit die gewünschte schnelle Reduktion des Antriebsmomentes durchführbar ist. Ist das Antriebsaggregat 2 als ein Dieselmotor ausgebildet, wird die Reduktion des Antriebsmomentes vorzugsweise über eine Ausblendung einer Einspritzung auf einfache Art und Weise in der erforderlichen kurzen Zeit realisiert.

Zur weiteren Erhöhung des Schaltkomforts wird die Übertragungsfähigkeit der Kupplung 5 während des gesamten Schaltvorganges in einem vorgegebenen Momentenbereich derart eingestellt, daß die Kupplung 5 bei der Zuschaltung des neuen Ganges von einem schlupffreien bzw. einem geringen schlupfenden Zustand in einen schlupfenden Zustand übergeht, womit erreicht wird, daß die beiden Schwingungen gedämpft werden und ein Synchronisationsvorgang zwischen dem Getriebe 3 und dem Antriebsaggregat 2 über eine Regelung der Übertragungsfähigkeit der Kupplung 5 erfolgen kann. Weiter wird durch die schlupfende Kupplung 5 erreicht, daß die Getriebeeingangswelle 19, welche beim Zuschalten des neuen Ganges abgebremst wird, das Bremsmoment nicht auf das Antriebsaggregat 2 weiterleitet, was zu einer Beeinträchtigung des Fahrkomforts führen würde.

### Bezugszeichen

- 1: Antriebsstrang
- 2: Antriebsaggregat
- 3: Getriebe
- 4: Antrieb
- 5: Kupplung
- 6A bis 6E: Zahnradpaarungen
- 7A bis 7C: Freilaufeinrichtungen
- 9A bis 9C: Schaltmuffen
- 10A, 10B: Kupplungsscheiben
- 11A, 11B: Kupplungsscheiben
- 12A, 12B: Kupplungsscheiben
- 14, 15, 16: Losrad
- 17: Getriebeausgangswelle
- 19: Getriebeeingangswelle

- M_ab: Abtriebsmoment
- t: Zeit
- T1: erster Bereich des Verlaufs des Antriebsmoments
- T2: Punkt des Verlaufs des Abtriebsmomentes
- T3: erster Abschnitt des Verlaufs des Abtriebsmomentes
- T4: weiterer Bereich des Verlaufs des Abtriebsmomentes
- T5: Minimum des Verlaufs des Abtriebsmomentes
- T6: zweiter Abschnitt des Abtriebsmomentes
- T7: Punkt des Verlaufs des Abtriebsmomentes
- T8: dritter Abschnitt des Verlaufs des Abtriebsmomentes

## Patentansprüche

1. Verfahren zur Steuerung und Regelung eines Antriebsstranges (1) eines Fahrzeugs mit einem Antriebsaggregat (2)', mit einem Getriebe (3) und mit einem Abtrieb (4), wobei das Getriebe (3) mit Zahnradpaarungen (6A bis 6E) korrespondierende steuerbare Freilaufeinrichtungen (7A bis 7C) zum Ab- oder Zuschalten eines alten oder eines neuen Ganges und eine antriebsseitig angeordnete Kupplung (5) aufweist, wobei bei Vorliegen eines Schaltsignals zur Durchführung einer Zughochschaltung ein Antriebsmoment des Antriebsaggregates (2) derart schnell reduziert wird, daß eine erste Schwingung in dem Antriebsstrang (1) angeregt wird, und wobei bei einer anschließenden Schaltung eine Wirkverbindung zwischen einer Freilaufeinrichtung und einer damit korrespondierenden Zahnradpaarung des neuen Ganges derart abrupt hergestellt wird, daß in dem Antriebsstrang eine zweite, der ersten Schwingung entgegenwirkende Schwingung erzeugt wird und die Wirkverbindung des alten Ganges aufgrund einer Momentumkehr von einem Zugmoment zu einem Schubmoment mit der Zuschaltung des neuen Ganges gelöst wird.

2. Verfahren nach Anspruch 1, **dadurch gekennzeichnet, daß** ein Zuschaltzeitpunkt des neuen Ganges derart vorgesehen ist, daß sich die Schwingungen wenigstens annähernd kompensieren.

3. Verfahren nach Anspruch 1 oder 2, **dadurch gekennzeichnet, daß** bei Vorliegen eines Schaltsignals eine Übertragungsfähigkeit der Kupplung (5) derart eingestellt wird, daß ein an dieser anliegendes aktuelles Antriebsmoment des Antriebsaggregates (2) auf den Abtrieb übertragen wird, wobei die Kupplung (5) wenigstens annähernd einen schlupffreien Zustand aufweist.

4. Verfahren nach einem der Ansprüche 1 bis 3, **dadurch gekennzeichnet , daß** bei Vorliegen eines Schaltsignals eine Wirkverbindung zwischen einer Freilaufeinrichtung und einer damit korrespondierenden Zahnradpaarung eines alten Ganges derart angesteuert wird, daß über diese ein anliegendes Zugmoment übertragen wird und die Wirkverbindung des alten Ganges gelöst wird, sobald ein Schubmoment anliegt.

5. Verfahren nach einem der Ansprüche 1 bis 4, **dadurch gekennzeichnet , daß** das Antriebsaggregat als ein Ottomotor ausgebildet ist und die Reduktion des Antriebsmomentes über einen Zündeingriff realisiert wird.

6. Verfahren nach einem der Ansprüche 1 bis 4, **dadurch gekennzeichnet , daß** das Antriebsaggregat (2) als ein Dieselmotor ausgebildet ist und die Reduktion des Antriebsmomentes über eine Ausblendung einer Einspritzung realisiert wird.

7. Verfahren nach einem der Ansprüche 1 bis 6, **dadurch gekennzeichnet , daß** die Wirkverbindung des neuen Ganges derart abrupt hergestellt wird, daß der Abtrieb (4) beschleunigt und eine Getriebeeingangswelle (19) abgebremst wird.

8. Verfahren nach einem der Ansprüche 1 bis 6, **dadurch gekennzeichnet , daß** die Übertragungsfähigkeit der Kupplung (5) während des Schaltvorganges in einem vorgegebenen Momentenbereich derart eingestellt wird, daß die Kupplung (5) bei der Zuschaltung des neuen Ganges von einem im wesentlichen schlupffreien Zustand in einen schlupfenden Zustand übergeht.

## Claims

1. Method for performing open-loop and closed-loop control of a drive train (1) of a vehicle having a drive unit (2), having a gearbox (3) and having an output (4), wherein the gearbox (3) has controllable free-wheeling devices (7A to 7C) which correspond to gear wheel pairings (6A to 6E) and have the purpose of disengaging or engaging an old or a new gearspeed, and a clutch (5) which is arranged on the drive side, wherein, when a shifting signal for carrying out a shifting-up operation is present, a drive torque of the drive unit (2) is quickly reduced in such a way that a first oscillation is excited in the drive train (1) and wherein, in the case of subsequent shifting, an operative connection is abruptly formed between a free-wheeling device and a gear wheel pairing, corresponding thereto, of the new gearspeed, in such a way that a second oscillation, which counteracts the first oscillation, is generated in the drive train, and the operative connection of the old gearspeed is disconnected owing to a reversal of torque from a traction torque to a pushing torque with the engagement of the new gearspeed.

2. Method according to Claim 1, **characterized in that** an engagement time of the new gearspeed is provided in such a way that the oscillations at least approximately compensate one another.

3. Method according to Claim 1 or 2, **characterized in that**, when a shifting signal is present, a transmission capability of the clutch (5) is set in such a way that a current drive torque of the drive unit (2) which is present at said clutch (5) is transmitted to the output, wherein the clutch (5) is at least approximately in a slip-free state.

4. Method according to one of Claims 1 to 3, **characterized in that**, when a shifting signal is present, an operative connection between a free-wheeling device and a gear wheel pairing, corresponding thereto, of an old gearspeed is actuated in such a way that an applied traction torque is transmitted via said gear wheel pairing and the operative connection of the old gearspeed is disconnected as soon as a pushing torque is present.

5. Method according to one of Claims 1 to 4, **characterized in that** the drive unit is embodied as a spark ignition engine and the reduction in the drive torque is implemented by means of an intervention into the ignition system.

6. Method according to one of Claims 1 to 4, **characterized in that** the drive unit (2) is embodied as a diesel engine and the reduction in the drive torque is embodied by shutting off an injection.

7. Method according to one of Claims 1 to 6, **characterized in that** the operative connection of the new gearspeed is formed abruptly by accelerating the output (4) and decelerating a gearbox input shaft (19).

8. Method according to one of Claims 1 to 6, **characterized in that** the transmission capability of the clutch (5) during the shifting process is set in a predefined torque range in such a way that, when the new gearspeed is engaged, the clutch (5) changes from an essentially slip-free state into a slipping state.

## Revendications

1. Procédé de commande et de régulation d'une chaîne cinématique (1) d'un véhicule comprenant une unité d'entraînement (2), avec une boîte de vitesses (3) et un entraînement de sortie (4), la boîte de vitesses (3) présentant des dispositifs de roue libre (7A à 7C) commandables correspondant à des paires de roues dentées (6A à 6E), pour désenclencher ou enclencher un rapport de vitesse ancien ou nouveau, et présentant un embrayage (5) due côté de l'entraînement, dans lequel, en présence d'un signal de changement de vitesse pour réaliser un passage à la vitesse supérieure en traction, un couple d'entraînement de l'unité d'entraînement (2) est réduit rapidement de telle sorte qu'une première oscillation dans la chaîne cinématique (1) soit amorcée, et dans lequel, lors d'un changement subséquent, une liaison fonctionnelle entre un dispositif de roue libre et une paire de roues dentées du nouveau rapport de vitesse, correspondant à celui-ci, soit établie brusquement de telle sorte que dans la chaîne cinématique, une deuxième oscillation opposée à la première oscillation soit produite, et que la liaison fonctionnelle de l'ancien rapport de vitesse soit libérée sur la base d'une inversion de couple d'un couple de traction à un couple de poussée avec l'enclenchement du nouveau rapport de vitesse.

2. Procédé selon la revendication 1, **caractérisé en ce qu'**un instant d'enclenchement du nouveau rapport de vitesse est prévu de telle sorte que les oscillations se compensent au moins approximativement.

3. Procédé selon la revendication 1 ou 2, **caractérisé en ce qu'**en présence d'un signal de changement de vitesse, une capacité de transfert de l'embrayage (5) est ajustée de telle sorte qu'un couple d'entraînement actuel de l'unité d'entraînement (2) s'appliquant sur celui-ci soit transmis à l'entraînement de sortie, l'embrayage (5) présentant au moins approximativement un état sans glissement.

4. Procédé selon l'une quelconque des revendications 1 à 3, **caractérisé en ce qu'**en présence d'un signal de changement de vitesse, une liaison fonctionnelle entre un dispositif de roue libre et une paire de roues dentées correspondant à celui-ci, d'un rapport de vitesse ancien, est commandée de telle sorte qu'elle permette le transfert d'un couple de traction appliqué et que la liaison fonctionnelle du rapport de vitesse ancien soit libérée dès qu'un couple de poussée est appliqué.

5. Procédé selon l'une quelconque des revendications 1 à 4, **caractérisé en ce que** l'unité d'entraînement est réalisée sous forme de moteur à allumage par étincelle, et la réduction du couple d'entraînement est réalisée par le biais d'une intervention sur l'allumage.

6. Procédé selon l'une quelconque des revendications 1 à 4, **caractérisé en ce que** l'unité d'entraînement (2) est réalisée sous forme d'un moteur diesel et la réduction du couple d'entraînement est réalisée par le biais d'une suppression de l'injection.

7. Procédé selon l'une quelconque des revendications 1 à 6, **caractérisé en ce que** la liaison fonctionnelle du nouveau rapport de vitesse est établie brusquement de telle sorte que l'entraînement de sortie (4) soit accéléré et qu'un arbre d'entrée de boîte de vitesses (19) soit freiné.

8. Procédé selon l'une quelconque des revendications 1 à 6, **caractérisé en ce que** la capacité de transfert de l'embrayage (5) pendant l'opération de changement de vitesse est ajustée dans une plage de couple prédéfinie de telle sorte que l'embrayage (5), lors de l'enclenchement du nouveau rapport de vitesse passe d'un état essentiellement sans glissement à un état glissant.
